# EUROPÄISCHE PATENTSCHRIFT

(11) **EP 0 448 574 B1**
(45) Veröffentlichungstag und Bekanntmachung des Hinweises auf die Patenterteilung: **29.09.1993**
(21) Anmeldenummer: 89913217.9
(22) Anmeldetag: 16.11.1989
(51) Int. Cl.: B60T 8/00

(54) **ANTIBLOCKIERREGELSYSTEM**
AN ANTI-LOCKING CONTROL SYSTEM
SYSTEME DE COMMANDE ANTIBLOCAGE

(30) Priorität: 08.12.1988 DE 3841296
(43) Veröffentlichungstag der Anmeldung: 02.10.1991
(73) Patentinhaber: ROBERT BOSCH GMBH, 70442 Stuttgart (DE)
(72) Erfinder: MÜLLER, Elmar, D-7145 Markgröningen (DE); MÜLLER, Werner, D-7257 Ditzingen (DE); JUNG, Jürgen, D-6660 Zweibrücken (DE)
(74) Vertreter: Kammer, Arno, Dipl.-Ing.
(86) Internationale Anmeldenummer: EP8901379
(87) Internationale Veröffentlichungsnummer: WO9006250

(56) Entgegenhaltungen:
- DE-A- 2 251 785
- DE-A- 2 801 326
- DE-A- 3 709 158
- FR-A- 1 592 595
- FR-A- 2 214 616
- FR-A- 2 568 202
- US-A- 4 585 280

## Beschreibung

### Stand der Technik

Aus der DE-OS 22 51 785 ist ein Antiblockierregelsystem bekannt, bei dem eine Hemmschaltung vorgesehen ist, die in ihrer angesteuerten Stellung verhindert, daß ein von der Auswerteschaltung des Antiblockierreglers erzeugtes Druckabsenksignal die Druckabsenkung tatsächlich auslöst, wenn das Druckabsenksignal schon kurz nach Ende eines Beschleunigungssignals auftritt. Die Hemmschaltung wird vom Beschleunigungssignal angesteuert und ein Zeitglied bewirkt, daß sie auch noch nach Beendigung des Beschleunigungssignals für eine vorgegebene Zeit in ihrer einen Druckabbau verhindernden Stellung verbleibt. Diese Hemmschaltung ist nach jedem Druckabbau wirksam. Sie soll einen bei Vorliegen von Radschwingungen sehr schnell wieder einsetzenden Druckabbau und in Folge davon eine Unterbremsung des Fahrzeugs verhindern.

### Vorteile der Erfindung

Bei der Erfindung wird nicht automatisch in jedem Regelzyklus der Druckabbau nach dem Ende des Beschleunigungssignals für eine Zeit verhindert, sondern zuerst geprüft, ob eine Schwingung vorliegt und nur dann, wenn diese Feststellung positiv ist, gezielt reagiert. Die Erfindung geht dabei von der Erkenntnis aus, daß bei Vorliegen einer Schwingung die Zykluszeiten etwa gleich groß sind. Die erfindungsgemäße Schwingungserkennung hat eine kurze Ansprechzeit und weist ein adaptives Verhalten auf. Eine Fehlinterpretation bei der Schwingungserkennung wird weitgehend vermieden. Durch die eingeleiteten Maßnahmen werden die Schwingungen gedämpft.

Anhand der Zeichnung wird ein Ausführungsbeispiel der Erfindung näher erläutert.

Es zeigen:
- Fig. 1: ein Blockschaltbild eines Antiblockierreglers,
- Fig. 2: ein Blockschaltbild eines Ausführungsbeispiels zur Realisierung des Erfindungsgedankens und seiner Weiterbildungen,
- Fig. 3: ein Diagramm zur Erläuterung.

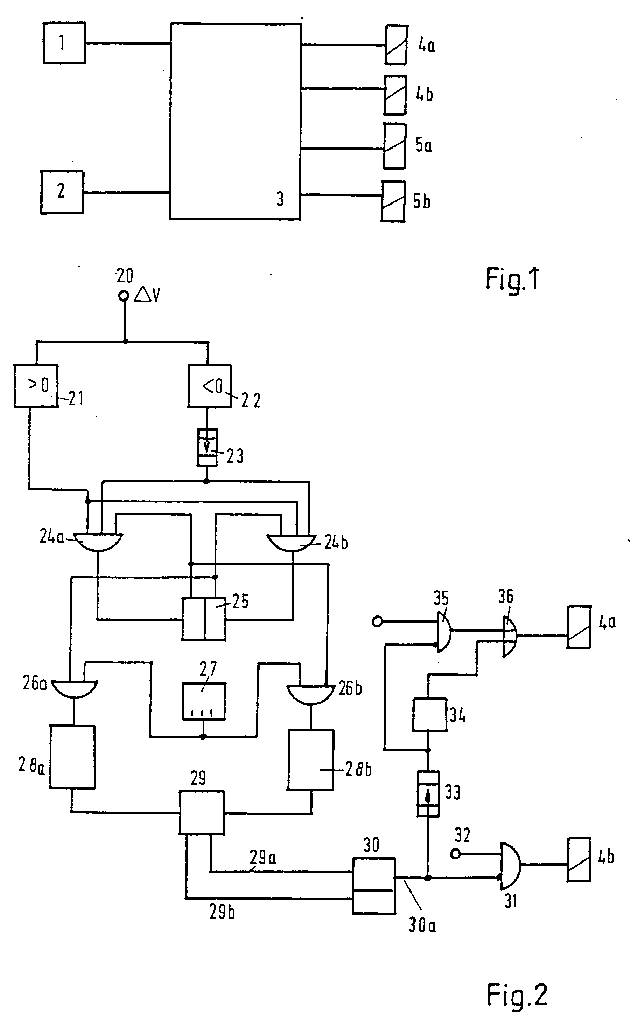

Fig. 1 zeigt ein zweikanaliges Antiblockierregelsystem bestehend aus zwei Radgeschwindigkeitssensoren 1 und 2, einer Auswerteschaltung 3 und zwei Bremsdrucksteuereinrichtungen, von denen jede aus einem Einlaßventil 4a bzw. 5a und einem Auslaßventil 4b bzw. 5b besteht. Es sei unterstellt, daß die Auswerteschaltung digital arbeitet; somit wird im Abstand des Arbeitstakts für jedes der beiden Räder die Radgeschwindigkeit V_{R} neu bestimmt, z.B. V_{R(n-1)}, V_{R(n)}, V_{R(n+1)}, wobei mit (n-1), (n) und (n+1) Taktzeitpunkte bezeichnet sind. In der Auswerteschaltung 3 wird auch die Geschwindigkeitsänderung ΔV = V_{R(n-1)} - V_{R(n)} von Taktzeitpunkt zu Taktzeitpunkt ermittelt. Diesesw ΔV wird an einer Klemme 20 der Schaltung der Fig. 2 eingespeist.

In den Blöcken 21 und 22 wird geprüft, ob das jeweils vorliegende ΔV positiv oder negativ ist, und es wird jeweils ein Signal abgegeben, wenn die Prüfung positiv ist. Das bei negativem ΔV auftretende Ausgangssignal des Blocks 22 wird einem Verzögerungszeitglied 23 zugeleitet, dessen Verzögerungszeit etwas größer als die Taktzeit ist. Ein Und-Gatter 24a wird durchlässig, wenn ein Signal von einem bistabilen Glied 25 vorliegt und der Block 21 ein erstes Signal wegen des Auftretens eines positiven ΔV abgibt. Das Ausangssignal des Und-Gatters 24a schaltet nun das bistabile Glied 25 um, so daß es nun ein Signal zu einem zweiten Und-Gatter 24b liefert. Dieses Signal gelangt auch zu einem Und-Gatter 26a, das nunmehr Zählimpulse eines Impulsgebers 27 zu einem Zähler 28a durchläßt.

Das Zählen der Impulse im Zähler 28a wird beendet, wenn wieder ein Signal am Ausgang des Blocks 21 auftritt und das Signal am Ausgang des Zeitglieds 23 noch ansteht. Diesmal wird das Und-Gatter 24b durchlässig, das das bistabile Glied 25 wieder in die Ausgangslage rücksetzt. Nun wird ein Und-Gatter 26b für die Impulse des Impulsgebers 27 durchlässig, dessen Impulse nun in einem Zähler 28b gezählt werden.

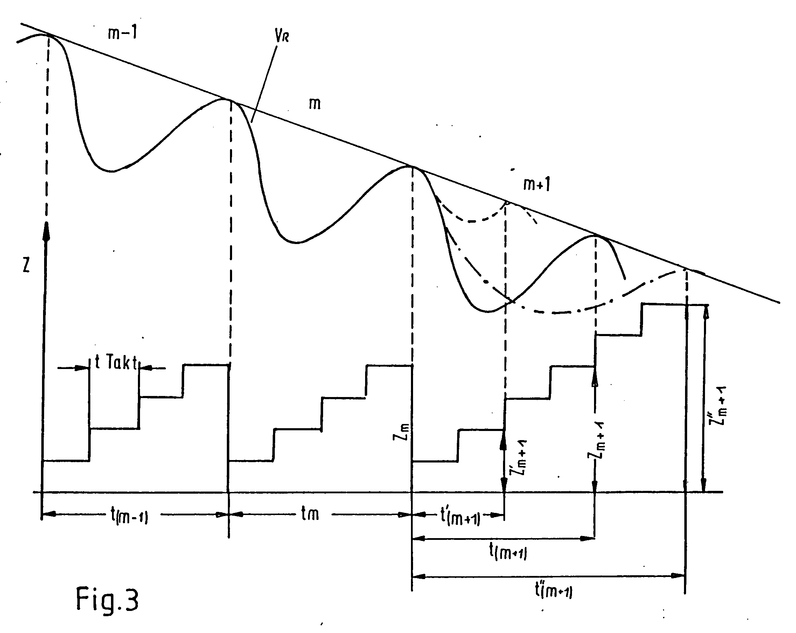

Fig. 3 zeigt den Verlauf der Radgeschwindigkeit V_{R} über der Zeit. Aus Fig. 3 geht hervor, daß die Signale des Blocks 21 und des Zeitglieds 23 nur jeweils zu den Maxima des V_{R}-Verlaufs gemeinsam auftreten und dann eines der Und-Gatter 24a oder 24b durchlässig machen. Es sei angenommen, daß das Und-Gatter 24a zu Beginn des (m-1)ten Regelzyklus durchlässig wurde. Dann steht am Ende des (m-1)- ten Zyklus im Zähler 28a ein Zählergebnis Z, das der Zyklusdauer t₍ₘ₋₁₎ entspricht. Das erneute gemeinsame Auftreten der Ausgangssignale des Blocks 21 und des Zeitglieds 23 zu Beginn des m-ten Zyklus macht das Und-Gatter 24b durchlässig und schaltet das bistabile Glied 25 zurück. Nun werden die Impulse des Impulsgebers 27 in den Zähler 28b eingezählt. Am Ende der Zyklusdauer steht dort ein Zählergebnis Z, das der Zeit tₘ entspricht. Sind die Ergebnisse der Zähler 28a und 28b etwa gleich groß, so gibt ein Vergleicher 29 ein Signal auf Leitung 29a ab, das ein bistabiles Glied 30 in die Stellung bringt, in der eine Leitung 30a ein Signal führt. Dieses Signal sperrt ein Und-Gatter 31 und verhindert damit, daß das Auslaßventil 4b von der Auswerteschaltung 3 her über eine Klemme 32 zwecks Druckabbau angesteuert werden kann. Dieses Signal wird auch noch einem Verzögerungsglied 33 zugeführt, dessen Verzögerungszeit bei etwa tₘ/2 liegen soll. Das Zeitglied könnte hierzu vom Zähler 28b entsprechend beeinflußt werden (nicht dargestellt). Nach der Verzögerungszeit des Zeitglieds 33 gibt dieses ein Signal ab, das einen Impulsgeber 34 aktiviert und ein Und-Gatter 35 sperrt. Der Impulsgeber bewirkt somit in dem (m+1)ten Zyklus über ein Oder-Gatter 36 und das Einlaßventil 4a einen gepulsten Druckaufbau bzw. bewirkt ein Druckhalten.

Im (m+1) Zyklus wird wieder in dem Zähler 28a eingezählt. Ist die Zyklusdauer (Zählerstand) deutlich kleiner z.B. Zm+1 < Z m/2 (gestrichelte Kurve) oder deutlich größer z.B. Zm+1 > Zm (strichpunktierte Kurve), so gibt der Vergleicher 29 ein Signal auf Leitung 29b ab und setzt das bistabile Glied zurück. Damit herrscht wieder Normalbetrieb. Ohne ein solches Signal wird der Sonderbetrieb beibehalten.

## Patentansprüche

1. Verfahren zum Betrieb eines Antiblockierregelsystems mit den Fahrzeugrädern zugeordneten Radgeschwindigkeitssensoren, einer Auswerteschaltung, der diese Radgeschwindigkeitssignale zugeführt werden und die in Abhängigkeit vom Radbewegungsverhalten daraus Bremsdrucksteuersignale erzeugt, die Bremsdrucksteuereinrichtungen zur Vermeidung zu hoher Bremsschlüpfe zugeführt werden, wobei in der Auswerteschaltung Mittel zur Vermeidung des Unterbremsens der Räder bei Radschwingungen enthalten sind, dadurch gekennzeichnet, daß die Zeitdauer aufeinanderfolgender Regelzyklen bestimmt und jeweils miteinander verglichen werden und daß bei Übereinstimmung der Zeitdauern zuzüglich einer Toleranz zweier aufeinanderfolgender Regelzyklen auf Sonderbetrieb umgeschaltet wird, bei dem in den folgenden Regelzyklen ein geforderter Druckabbau verhindert und phasenverschoben ein Druckaufbau bzw. ein Druckhalten eingeleitet wird.

2. Verfahren nach Anspruch 1, dadurch gekennzeichnet, daß bei einer vorgegebenen Abweichung der Zeitdauer des dritten Regelzyklus von der Zeitdauer der beiden vorhergehenden Regelzyklen die Umschaltung auf Sonderbetrieb rückgängig gemacht wird.

## Claims

1. Method of operating an antilocking control system having wheel speed sensors assigned to the vehicle wheels, an evaluation circuit to which the said wheel speed signals are fed and which generates therefrom, as a function of the wheel motion characteristic, brake pressure control signals which are fed to brake pressure control devices to avoid excessive brake slips, means being contained in the evaluation circuit for avoiding underbraking of the wheels in the event of wheel oscillations, characterised in that the time duration [sic] of consecutive control cycles are determined and compared with one another in each case, and in that, if the time durations, including a tolerance, of two consecutive control cycles agree, the special mode is selected in which a required pressure reduction is prevented in the subsequent control cycles and a pressure build-up or a pressure maintenance is initiated with a phase shift.

2. Method according to Claim 1, characterised in that, for a specified deviation of the time duration of the third control cycle from the time duration of the two preceding control cycles, the selection of the special mode is cancelled.

## Revendications

1. Procédé de mise en oeuvre d'un système de commande antiblocage comportant des détecteurs tachymétriques associés aux roues du véhicule, un circuit d'exploitation qui reçoit les signaux des détecteurs et qui, en fonction des mouvements relatifs des roues, génère des signaux de commande de la pression de freinage adressés aux dispositifs commandant cette pression de manière à éviter des patinages importants, le circuit d'exploitation étant équipé de moyens pour éviter un sous-freinage des roues au cours des oscillations de leur rotation, caractérisé en ce que les durées des cycles de commande successifs sont déterminés et comparés entre eux, le dépassement d'une tolérance concernant l'écart entre les durées de deux cycles consécutifs provoquant le passage en fonctionnement spécial qui empêche une poursuite de la baisse de pression au cours des cycles de commande suivants et engage en déphasage une remontée ou un maintien de la pression.

2. Procédé selon la revendication 1, caractérisé en ce que, s'il apparaît entre la durée du troisième cycle de commande et celle des deux cycles précédents, un écart dépassant une valeur prédéterminée, la commutation sur le fonctionnement spécial est ramenée en arrière.
